# EUROPÄISCHE PATENTSCHRIFT

(11) **EP 3 723 933 B1**
(45) Veröffentlichungstag und Bekanntmachung des Hinweises auf die Patenterteilung: **03.07.2024**
(21) Anmeldenummer: 18825593.9
(22) Anmeldetag: 10.12.2018
(51) Int. Cl.: B23K 26/70, B23K 26/12

(54) **HOCHVAKUUMKAMMER, UND VERFAHREN ZUM BETREIBEN EINER HOCHVAKUUMKAMMER FÜR DIE THERMISCHE BEARBEITUNG EINES WERKSTÜCKS MITTELS EINES LASERSTRAHLS**
HIGH-VACUUM CHAMBER, AND METHOD FOR OPERATING A HIGH VACUUM CHAMBER FOR THERMALLY PROCESSING A WORKPIECE USING A LASER BEAM
CHAMBRE À VIDE POUSSÉ, ET PROCÉDÉ POUR FAIRE FONCTIONNER UNE CHAMBRE À VIDE POUSSÉ POUR LE TRAITEMENT THERMIQUE D'UNE PIÈCE À L'AIDE D'UN FAISCEAU LASER

(30) Priorität: 12.12.2017 DE 102017222490
(43) Veröffentlichungstag der Anmeldung: 21.10.2020
(73) Patentinhaber: KTW Technology GmbH, 56653 Wehr (DE)
(72) Erfinder: WEBER, Klaus, 53721 Siegburg (DE)
(74) Vertreter: Jostarndt Patentanwalts-AG
(86) Internationale Anmeldenummer: PCT/EP2018/084208
(87) Internationale Veröffentlichungsnummer: WO 2019/115467

(56) Entgegenhaltungen:
- EP-A1- 2 644 308
- DE-C1- 4 238 826

## Beschreibung

Die Erfindung betrifft eine Hochvakuumkammer für die thermische Bearbeitung eines Werkstücks mittels eines Laserstrahls. Weiterhin betrifft die Erfindung ein System für die thermische Bearbeitung eines Werkstücks mittels eines Laserstrahls sowie ein Verfahren zum Betreiben einer Hochvakuumkammer.

Bei der thermischen Bearbeitung eines Werkstücks, beispielsweise dem Schweißen oder thermischen Trennen, ist es wichtig, Sauerstoff von der Bearbeitungsstelle fernzuhalten. Bei der thermischen Bearbeitung wird die Bearbeitungsstelle üblicherweise stark erhitzt, wodurch die Oxidationsneigung des Werkstoffs stark zunimmt. Beispielsweise beim Schweißen sind daher das Schweißen unter Schutzgas bekannt, wobei die sauerstoffhaltige Atmosphäre an der Bearbeitungsstelle temporär durch ein sauerstofffreies Schutzgas ersetzt wird. Da das Schutzgas in freier Atmosphäre schnell durch die normale, sauerstoffhaltige Luft ersetzt wird, kann dennoch Sauerstoff an die stark erhitzte Bearbeitungsstelle des Werkstücks gelangen, sodass ein Oxidieren des Werkstoffs nicht ausgeschlossen ist. Das Werkstück kann in eine Kammer verbracht werden, die mit einem Schutzgas flutbar ist. Allerdings ist hierbei nachteilig, dass die Atmosphäre in der Kammer ersetzt werden muss, d.h. dass die Kammer zunächst evakuiert werden muss, ehe das Schutzgas eingeleitet werden kann. Ist die Kammer aber evakuiert, kann auf die Flutung mit einem Schutzgas verzichtet werden, da im Vakuum ebenfalls kein Sauerstoff vorliegt. Es ist vorteilhaft, die Werkstückbearbeitung in der Kammer durch Elektronenstrahlen oder elektromagnetische Stahlen, beispielsweise durch Laserstrahlen, vorzunehmen, da diese leicht in eine Kammer eingekoppelt werden können. In einer evakuierten Vakuumkammer können von einem Werkstück, bedingt durch chemische, physikalische oder mechanische Prozesse, insbesondere durch die Bearbeitung des Objektes mittels elektromagnetischer Strahlung oder Teilchenstrahlung gasförmige, flüssige oder feste Stoffe mit hoher Temperatur freigesetzt werden. Diese können beispielsweise als Atome, Moleküle oder Partikel, in Form von Dampf oder als Plasma aus dem Werkstück austreten. Infolge des in der Vakuumkammer herrschenden, für die Bearbeitung benötigten geringen Druckes stehen den emittierten Stoffen nur in geringem Maße Wechselwirkungspartner zur Verfügung, an welche sie ihre Energie abgegeben können. Folglich erreichen sie alle zugänglichen Oberflächen nahezu ungehindert und schlagen sich an diesen nieder. Dies trifft umso mehr zu, je tiefer das Vakuum ist. Dabei nimmt die Qualität einer im Vakuum erstellten Schweißnaht mit dem Grad der Abwesenheit von Sauerstoff zu. Mit anderen Worten bietet das Schweißen im Hochvakuum mit einem Druck von beispielsweise 10⁻³ mbar oder weniger eine höhere Schweißnahtqualität als das Schweißen im Niederdruckbereich von beispielsweise 10⁻¹ mbar.

Allerdings ist die Abdichtung einer Vakuumkammer um so schwieriger, je tiefer der Druck in der Kammer fällt. Daher ist es bei Hochvakuumkammern vorteilhaft, möglichst wenig Durchführungen durch die Kammerwandung vorzusehen und die vorhandenen Durchführungen geometrisch möglichst einfach zu gestalten. Die elektromagnetische Strahlung oder die Teilchenstrahlung kann beispielsweise durch Fenster in die Vakuumkammer eingekoppelt werden. Dabei wird hier und im folgenden unter dem Begriff Fenster ein Bereich in der Wandung der Vakuumkammer verstanden, der für die Strahlung transparent ist, d.h. für die Strahlung möglichst verlustarm durchgängig ist. Für die von einem Laser abgegebenen elektromagnetische Strahlung hängt dies von der Wellenlänge der elektromagnetischen Strahlung ab. Das Fenster kann eine Fensterscheibe aus Quarzglas oder Saphirglas aufweisen und beispielsweise kreisrund ausgestaltet sein. Solche Fensterscheiben weisen diskrete Transmissionseigenschaften auf, die nicht verändert werden dürfen, um gleichbleibende Bearbeitungsbedingungen zu gewährleisten. Schlägt sich auf der zugänglichen Oberfläche des Fensters beispielsweise in Folge einer in der Vakuumkammer stattfindenden Bearbeitung eines metallischen Werkstücks Metall ab, so nimmt der Transmissionsgrad des Fensters ab. Dies kann dazu führen, dass das Fenster unbrauchbar wird und gereinigt oder sogar ausgetauscht werden muss. Dazu muss die Fensterscheibe aus der Vakuumkammer entfernt werden, d.h. die Vakuumkammer muss geöffnet werden. Dazu muss die Vakuumkammer belüftet werden, was mit einem hohen Zeitaufwand und somit langen Standzeiten der Vorrichtung verbunden ist. Ist eine Reinigung nicht möglich, muss die Fensterscheibe erneuert werden, wodurch erhebliche Kosten verursacht werden. Die Kosten resultieren einerseits aus den Kosten für die Fensterscheibe. Diese muss eine Mindestdicke aufweisen, da sie der Druckbelastung, die auf der Wandung der Vakuumkammer lastet, gewachsen sein muss. Solche Quartz- oder Saphirglasscheiben sind sehr teuer. Andererseits muss die Fensterscheibe druckdicht in die Wandung der Kammer eingebaut werden, wodurch erheblich De- und insbesondere Montagekosten entstehen.

Es ist daher wünschenswert, die Oberfläche eines Fensters, welche in einer evakuierten Vakuumkammer für Verunreinigungen zugänglich ist, zu schützen.

Aus der europäischen Offenlegungsschrift EP 2 644 308 A1 (offenbarend alle Merkmale und Schritte des Oberbegriffs der Ansprüche 1 und 14) ist bekannt, eine Oberfläche einer optischen Komponente zu schützen, indem ein transparentes Schutzelement, beispielsweise eine Glas- oder Kunststoffscheibe, in dem zwischen dem zu bearbeitenden Werkstück und der optischen Komponente verlaufenden Strahlengang positioniert wird. Das Schutzelement bietet eine alternative Oberfläche, auf welcher sich die Verunreinigungen niederschlagen, sodass diese die Oberfläche der optischen Komponente nicht oder nur in verringertem Maß erreichen. Der Strahlengang wird dabei bedingt durch die Transparenz des Schutzelementes nicht beeinflusst. Ist die Oberfläche des Schutzelementes verunreinigt, so muss dieses - anstelle der zu schützenden optischen Komponente - gereinigt oder ersetzt werden. In einer Ausführungsform der gezeigten Vorrichtung ist vor dem eigentlichen Schutzelement ein zweites Schutzelement vorgesehen. Das erste Schutzelement kann um die eigene Achse rotieren, sodass bezüglich des Strahlengangs eine andere Stelle der Fläche des Schutzelements in den Strahlengang gebracht wird. Das zweite Schutzelement steht bezüglich des Strahlengangs fest und weist eine Durchgangsbohrung auf, durch die der Strahlengang führt. Dadurch deckt das zweite Schutzelement alle Bereiche des ersten Schutzelements außer dem im Strahlengang befindlichen Bereich ab, wodurch sich die Verunreinigungen im Wesentlichen nur auf diesem Bereich des ersten Schutzelements ablagern. Wenn die Anhäufung von Verunreinigungen auf diesem Bereich so groß wird, dass der Bereich okkludiert, kann das erste Schutzelement soweit rotiert werden, dass ein anderer, nicht verschmutzter Bereich des ersten Schutzelements in den Strahlengang zu liegen kommt. Das erste Schutzelement muss erst gereinigt oder ausgetauscht werden, wenn seine gesamte Oberfläche okkludiert ist. Das belüftungsfreie Betriebsintervall der Vorrichtung wird auf diese Weise verlängert. Allerdings reicht diese Verlängerung für eine Vielzahl von Bearbeitungsanwendungen nicht aus, um diese unterbrechungsfrei durchführen zu können, wobei die erforderliche Bearbeitungszeit beispielsweise von dem Werkstoff des zu bearbeitenden Werkstücks und der Komplexität der Bearbeitung abhängt.

Aufgabe der Erfindung ist es, eine Hochvakuumkammer für die thermische Bearbeitung eines Werkstücks mittels eines Laserstrahls anzugeben, mit der die unterbrechungsfreie Bearbeitungszeit gegenüber dem Stand der Technik deutlich verlängerbar ist. Weiterhin ist es Aufgabe der Erfindung, ein entsprechendes System für die thermische Bearbeitung eines Werkstücks mittels eines Laserstrahls anzugeben. Darüber hinaus ist es Aufgabe der Erfindung ein Verfahren zum Betreiben einer Hochvakuumkammer für die thermische Bearbeitung eines Werkstücks mittels eines Laserstrahls anzugeben.

Erfindungsgemäß wird die erste Aufgabe durch eine Hochvakuumkammer mit den Merkmalen des unabhängigen Anspruches 1 gelöst. Vorteilhafte Weiterbildungen der Hochvakuumkammer ergeben sich aus den Unteransprüchen 2-12. Die Aufgabe wird ferner durch ein System nach Anspruch 13 gelöst. Die dritte Aufgabe wird durch ein Verfahren nach Anspruch 14 gelöst. Vorteilhafte Ausführungsformen des Verfahrens ergeben sich aus den Unteransprüchen 15 und 16.

Eine Hochvakuumkammer für die thermische Bearbeitung eines Werkstücks mittels eines Laserstrahls gemäß der Erfindung weist eine Hochvakuumkammer auf, in der ein Vakuum von 10⁻³ mbar oder tiefer erzeugbar ist und die mindestens ein Fenster aufweist, durch das der Laserstrahl einkoppelbar ist. Das zu bearbeitende Werkstück ist in der Hochvakuumkammer positionierbar. Zwischen dem mindestens einem Fenster und dem Werkstück ist eine Schutzvorrichtung angeordnet, wobei die Schutzvorrichtung eine flächige, für die Wellenlänge des Lasers transparente und um die eigene Achse rotierbare Scheibe aufweist, wobei die Schutzvorrichtung so innerhalb der Hochvakuumkammer angeordnet ist, dass der Laserstrahl durch die Scheibe hindurch auf das Werkstück leitbar ist, wobei die Schutzvorrichtung weiterhin ein zwischen der Scheibe und dem Werkstück angeordnetes und eine Durchgangsbohrung aufweisendes Vorblech aufweist, wobei die Schutzvorrichtung so innerhalb der Hochvakuumkammer anordnenbar ist, dass der Laserstrahl durch die Scheibe und die Durchgangsbohrung des Vorblechs hindurch auf das Werkstück leitbar ist, wobei die Schutzvorrichtung weiterhin eine Translationsvorrichtung aufweist, die relativ zu der Hochvakuumkammer translatorisch oszillierend bewegbar angeordnet ist, wobei die Scheibe rotatorisch bewegbar relativ zu der Translationsvorrichtung angeordnet und mit der Translationsvorrichtung verbunden ist.

Die Scheibe kann wie das Fenster Quartzglas oder Saphirglas enthalten. Da die Scheibe aber keiner Druckbelastung ausgesetzt ist, kann die Scheibe deutlich dünner als die Fensterscheibe ausgeführt werden, was den Preis der Scheibe deutlich reduziert. Weiterhin muss beim Austausch der Scheibe nicht auf den druckdichten Einbau geachtet werden, wodurch die Montagekosten deutlich minimiert werden.

Die Schutzvorrichtung bietet eine alternative Oberfläche, auf der sich die Verunreinigungen niederschlagen, sodass die Oberfläche des Fensters nicht oder nur in deutlich verringertem Maß verunreinigt wird. Der Strahlengang wird dabei bedingt durch die Transparenz der Scheibe nicht beeinflusst. Die Scheibe kann um die eigene Achse rotieren, sodass der Laserstrahl einen ringförmigen Bereich der Scheibe durchstrahlt. Durch das mit einer Durchgangsbohrung versehene Vorblech werden alle Bereiche der Scheibe außer dem sich gegenüber der Durchgangsbohrung befindlichen Bereich abgedeckt, sodass sich hier keine oder nur sehr geringe Verunreinigung ablagern kann.

Durch die Translationsvorrichtung ist es möglich die Scheibe zusätzlich zu ihrer rotatorischen Bewegung relativ zu der Hochvakuumkammer translatorisch oszillierend zu bewegen. Dadurch ist es möglich, den von dem Laserstrahl durchstrahlten Bereich der Scheibe von dem ringförmigen Bereich auf die gesamte Fläche der Scheibe auszudehnen. Weiterhin wird eine Verunreinigung auf der gesamten Fläche der Scheibe verteilt, wodurch die Konzentration der Verunreinigung auf der Scheibe sehr viel langsamer ansteigt, womit die unterbrechungsfreie Bearbeitungszeit eines Werkstücks in der Hochvakuumkammer gegenüber dem Stand der Technik deutlich verlängert ist.

In einer vorteilhaften Ausführungsform weist die Durchgangsbohrung des Vorblechs eine Blende mit veränderbarem Durchlassdurchmesser auf. Dadurch kann die für den Durchlass von Verunreinigungen zur Verfügung stehende Fläche minimiert werden, womit die unterbrechungsfreie Bearbeitungszeit eines Werkstücks in der Hochvakuumkammer weiter verlängert wird.

In einer weiteren vorteilhaften Ausführungsform ist zwischen dem Vorblech und dem Werkstück ein Adapter angeordnet, wobei der Adapter einen Durchgangskanal für den Laserstrahl aufweist, wobei der Durchgangskanal zentrisch zu der Durchgangsbohrung des Vorblechs angeordnet ist. Durch den Adapter werden Partikel, die für eine Verunreinigung der Scheibe sorgen und die nicht im Wesentlichen senkrecht auf den Durchgangskanal zukommen, von dem Durchströmen des Durchgangskanals abgehalten, sodass sie nicht bis zu der Scheibe vordringen. Die unterbrechungsfreie Bearbeitungszeit eines Werkstücks in der Hochvakuumkammer wird damit weiter verlängert.

Es hat sich weiterhin als vorteilhaft herausgestellt, wenn der Durchgangskanal eine Blende mit veränderbarem Durchlassdurchmesser aufweist. Dadurch kann die für den Durchlass von Verunreinigungen zur Verfügung stehende Fläche minimiert werden, womit die unterbrechungsfreie Bearbeitungszeit eines Werkstücks in der Hochvakuumkammer weiter verlängert wird.

Weiterhin hat es sich als vorteilhaft erwiesen, wenn der Adapter mit dem Vorblech verbunden ist. Diese Ausgestaltung vereinfacht die Positionierung des Adapters in Bezug auf das Vorblech. Die Verbindung kann dabei über alle bekannten Verbindungstechniken, wie Schraub-,Niet-, Löt- oder Schweißverbindungen oder auch für eine formschlüssige Verbindung erfolgen. Unter den Begriff verbunden soll darüber hinaus auch eine einteilige Ausgestaltung von Vorblech und Adapter verstanden sein.

In einer vorteilhaften Ausführungsform weist der Adapter eine kegelförmige Außenkontur auf. Mit einer solchen Ausgestaltung werden noch mehr Partikel davon abgehalten, in den Durchgangskanal einzudringen und sich auf der Scheibe abzulagern, wodurch die unterbrechungsfreie Bearbeitungszeit eines Werkstücks in der Hochvakuumkammer noch weiter verlängert wird.

Weiterhin hat es sich als vorteilhaft erwiesen, wenn das Vorblech ortsfest bezüglich des Laserstrahls angeordnet ist. In einer vorteilhaften Ausführungsform ist die Scheibe auf einem Drehteller gelagert. Der Drehteller kann über alle bekannten Antriebsarten, wie beispielsweise einen Riemenantrieb oder auch einen Treibrad- oder Zahnradantrieb angetrieben werden. Diese Ausführungsformen vereinfachen den Aufbau der Hochvakuumkammer, wodurch diese kostengünstig herstellbar ist.

In einer weiteren vorteilhaften Ausführungsform weist die Hochvakuumkammer mehrere Fenster auf, durch die der Laserstrahl einkoppelbar ist. In dieser Ausführungsform kann die Einkopplungsstelle des Laserstrahls bezüglich des zu bearbeitenden Werkstücks optimal gewählt werden. Darüber hinaus ist es damit auch möglich, mehrere Werkstücke entweder gleichzeitig oder nacheinander zu bearbeiten, ohne dass die Hochvakuumkammer für einen Werkstückwechsel belüftet und anschließend wieder evakuiert werden müsste. Dazu hat es sich als vorteilhaft erwiesen, wenn die Schutzvorrichtung zwischen jedem Fenster der Hochvakuumkammer und dem Werkstück positionierbar ist.

In einer weiteren vorteilhaften Ausführungsform weist die Hochvakuumkammer eine erste Spannvorrichtung zur Positionierung des Werkstücks auf. Diese erste Spannvorrichtung kann beispielsweise ein 3-Achs-Spanner sein, mit dem ein eingespanntes Werkstück in drei Achsen translatorisch bewegt und positioniert werden kann. Es können aber auch Spanner mit mehr oder weniger Achsen verwendet werden, wobei die Achsen auch rotatorische Bewegungsachsen bilden können.

In einer weiteren vorteilhaften Ausführungsform ist die erste Spannvorrichtung dazu eingerichtet, das Werkstück translatorisch bezüglich der Hochvakuumkammer zu positionieren, wobei die Hochvakuumkammer eine zweite, auf der ersten Spannvorrichtung aufgespannte zweite Spannvorrichtung zur rotatorischen Positionierung des Werkstücks aufweist. Mit einer solchen Anordnung ist das Werkstück besonders flexibel innerhalb der Hochvakuumkammer zu positionieren.

Ein erfindungsgemäßes System für die thermische Bearbeitung eines Werkstücks mittels eines Laserstrahls ist dadurch gekennzeichnet, dass das System eine Hochvakuumkammer wie zuvor beschrieben und eine Laservorrichtung, die außerhalb der Hochvakuumkammer angeordnet ist, aufweist. Durch die Anordnung der gesamten Laservorrichtung insbesondere inklusive der erforderlichen optischen Komponenten zur Strahlfokussierung und / oder Strahlumlenkung müssen keine optischen Komponenten der Laservorrichtung innerhalb der Hochvakuumkammer angeordnet werden, sodass diese auch nicht durch Partikel des Werkstoffs des bearbeiteten Werkstücks verunreinigt werden können.

Das erfinderische Verfahren zum Betreiben einer Hochvakuumkammer für die thermische Bearbeitung eines Werkstücks mittels eines Laserstrahls, wobei die Hochvakuumkammer mindestens ein Fenster und eine Schutzvorrichtung aufweist und wobei die Schutzvorrichtung eine bezüglich der Hochvakuumkammer translatorisch oszillierend bewegbare Translationsvorrichtung und eine bezüglich der Translationsvorrichtung um ihre eigene Achse rotierbare Scheibe aufweist, ist gekennzeichnet durch die Schritte, Positionieren eines Werkstücks in der Hochvakuumkammer, Schließen der Hochvakuumkammer und erzeugen eines Vakuums innerhalb der Hochvakuumkammer von mindestens 10⁻³ mbar, Starten der Rotation der Scheibe und einer oszillierenden Translationsbewegung der Translationsvorrichtung, und Einkoppeln des Laserstrahls. Durch die Rotation und gleichzeitige Translation der Scheibe ist es möglich, den von dem Laserstrahl durchstrahlten Bereich der Scheibe auf die gesamte Fläche der Scheibe auszudehnen. Weiterhin wird eine Verunreinigung auf der gesamten Fläche der Scheibe verteilt, wodurch die Konzentration der Verunreinigung auf der Scheibe sehr viel langsamer ansteigt, womit die unterbrechungsfreie Bearbeitungszeit eines Werkstücks in der Hochvakuumkammer gegenüber dem Stand der Technik deutlich verlängert ist.

In einer vorteilhaften Ausführungsform des Verfahrens wird die Scheibe nach Beendigung oder Unterbrechung des Bearbeitungsprozesses durch Auftragen einer Diamantsuspension und Polieren mittels Reiben einer Filzscheibe über die Scheibenoberfläche gereinigt. Wird die Scheibe regelmäßig auf diese Art gereinigt, können die Verunreinigungen leicht entfernt werden, wodurch die Standzeit der Scheibe deutlich erhöht wird. Dabei hat es sich als vorteilhaft erwiesen, wenn die Diamantsuspension Diamantkörner mit einem Durchmesser von ca. 3 µm enthält. Mit einer solchen Diamantsuspension ist eine besonders effektive Reinigung der Scheibe möglich.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Prinzipskizze der Vorgänge bei einer Laserschweißung nach dem Stand der Technik
- Fig. 2: Prinzipskizze einer erfindungsgemäßen Hochvakuumkammer als Übersichtszeichnung
- Fig. 3: Prinzipskizze eines Ausschnitts einer erfindungsgemäßen Hochvakuumkammer

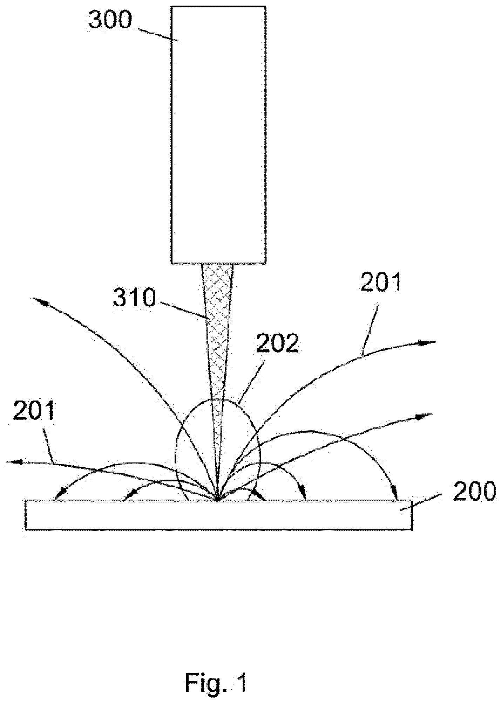

Fig. 1 zeigt eine Prinzipskizze der Vorgänge bei einer Laserschweißung nach dem Stand der Technik. Aus einer Laservorrichtung 300 tritt ein Laserstrahl 310 aus und trifft auf ein Werkstück 200. Der Laserstrahl 310 ist durch die Laservorrichtung 300 auf die Oberfläche des Werkstücks 200 fokussiert. Im Fokus des Laserstrahls 310 steigt die Temperatur auf der Oberfläche des Werkstücks 200 stark an, sodass an dieser Stelle das Werkstück 200 verschweißt. Allerdings werden durch die thermische Beanspruchung des Werkstücks 200 auch gasförmige, flüssige oder feste Teilchen 201 mit hoher Temperatur freigesetzt. Diese können beispielsweise als Atome, Moleküle oder Partikel, in Form von Dampf oder als Plasma aus dem Werkstück austreten. Insbesondere kann sich auch oberhalb der Schweißstelle eine Plasmawolke 202 ausbilden. Wird die Laserschweißung unter erniedrigtem Luftdruck, beispielsweise in einer mehr oder weniger stark evakuierten Vakuumkammer, vorgenommen, stehen den emittierten Teilchen 201 nur in geringem Maße Wechselwirkungspartner zur Verfügung, an welche sie ihre Energie abgegeben können. Folglich erreichen sie alle zugänglichen Oberflächen nahezu ungehindert und schlagen sich an diesen nieder. Dies trifft umso mehr zu, je tiefer der herrschende Umgebungsdruck ist.

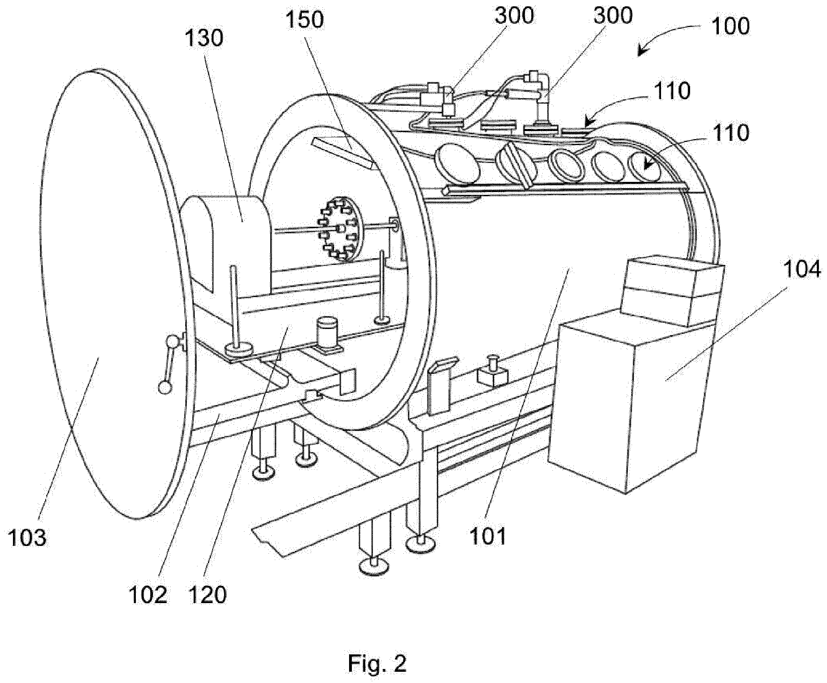

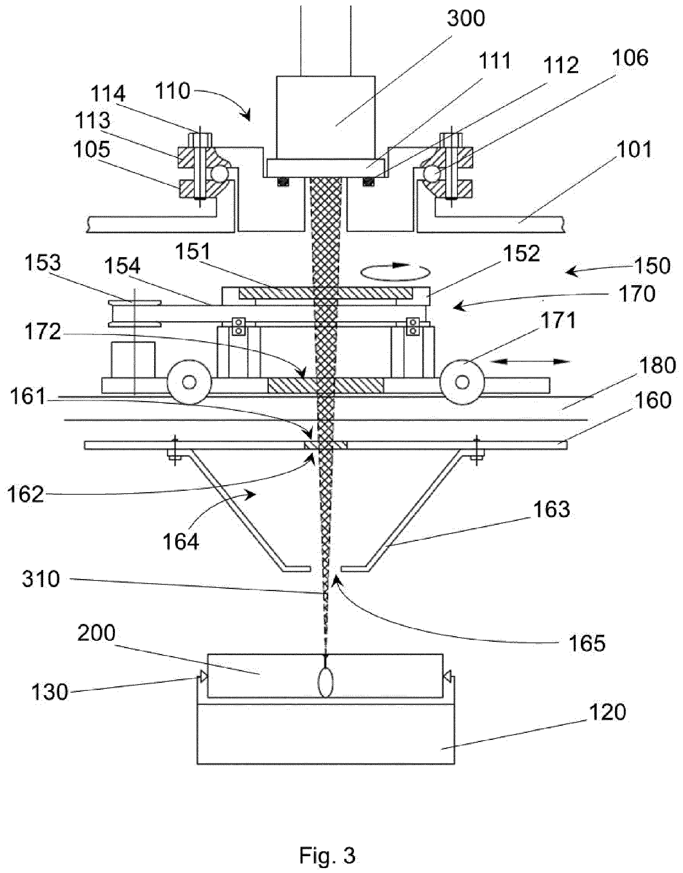

Fig. 2 zeigt eine Prinzipskizze einer erfindungsgemäßen Hochvakuumkammer 100 als Übersichtszeichnung. Die Hochvakuumkammer 100 kann mittels einer Vakuumpumpe (nicht gezeigt) auf einen Druck von 10⁻³ mbar oder tiefer evakuiert werden. Weiterhin weist die Hochvakuumkammer 100 eine Wandung 101 und neun Fenster 110 auf, durch die jeweils ein Laserstrahl 310 einkoppelbar oder durch das Innere der Hochvakuumkammer 100 beobachtbar ist. Dazu können die Fenster eine kreisrunde Fensterscheibe 111 beispielsweise aus Quartzglas oder Saphirglas aufweisen. Die Fensterscheibe 111 ist detailliert in Fig. 3 zu sehen und beschrieben. Der Prozess des Evakuierens, Aufrechthaltens des Unterdrucks sowie des Laserschweißens wird von einer in einem außerhalb der Hochvakuumkammer 100 angeordneten Steuerschrank 104 angeordneten Steuerung (nicht gezeigt) gesteuert. In der gezeigten Ausführungsform ist an zwei Fenstern 110 jeweils eine Laservorrichtung 300 angeordnet, sodass ein in der Hochvakuumkammer 100 befindliches Werkstück 200 (nicht gezeigt) an zwei Stellen gleichzeitig oder auch nacheinander mit einem Laserstrahl 310 bearbeitbar ist. Durch die gleichzeitige Bearbeitung an mehreren Stellen des Werkstücks 200 ist die gesamte Bearbeitungsdauer des Werkstücks verkürzbar. Weiterhin kann durch die Verwendung von mehreren Laserstrahlen 310, die an unterschiedlichen Stellen in die Hochvakuumkammer 100 eingekoppelt werden, auch ein Werkstück 200 an unterschiedlichen Stellen bearbeitet werden, die innerhalb der Hochvakuumkammer beispielsweise aus geometrischen Gründen nicht in den Bereich eines einzelnen Laserstrahls 310 bringbar sind. Weiterhin ist auch die gleichzeitige und sequentielle Bearbeitung von mehreren Werkstücken 200 möglich, wobei die Hochvakuumkammer 100 nur einmal evakuiert werden muss. Da der Laserstahl 310 durch mehrere, an unterschiedlichen Stellen der Wandung 101 der Hochvakuumkammer 100 angeordneten Fenster 110 in die Hochvakuumkammer 100 eingekoppelt werden kann, kann die Einkopplungsstelle des Laserstrahls 310 bezüglich des zu bearbeitenden Werkstücks 200 optimal gewählt werden.

Das zu bearbeitende Werkstück 200 ist in der Hochvakuumkammer 100 positionierbar. Dazu weist die Hochvakuumkammer 100 einen an einer Stirnplatte 103 angeordneten Schlitten 102 auf, auf dem eine erste Spannvorrichtung 120 angeordnet ist. Die erste Spannvorrichtung 120 ist dazu eingerichtet, das Werkstück 200 translatorisch bezüglich der Hochvakuumkammer 100 zu positionieren. Auf der ersten Spannvorrichtung 120 ist eine zweite Spannvorrichtung 130 zur rotatorischen Positionierung des Werkstücks 200 aufgespannt. Damit ist das Werkstück 200 besonders flexibel translatorisch als auch rotatorisch innerhalb der Hochvakuumkammer 100 zu positionieren. Die erste Spannvorrichtung 120 kann beispielsweise ein 3-Achs-Spanner sein, mit dem ein eingespanntes Werkstück 200 in drei Achsen im Raum translatorisch bewegt und positioniert werden kann. Es können aber auch Spanner mit mehr oder weniger Achsen verwendet werden, wobei die Achsen auch rotatorische Bewegungsachsen bilden können. Der Schlitten 102 kann mit der Stirnplatte in Achsrichtung der Hochvakuumkammer 100 aus dieser herausgezogen werden. Wird der Schlitten 102 wieder in die Hochvakuumkammer 100 eingeschoben, dichtet die Stirnplatte 103 die Hochvakuumkammer 100 zur Außenatmosphäre ab.

Zwischen den Fenstern 110, durch die der Laserstrahl 310 eingekoppelt wird, und dem Werkstück 200 ist eine Schutzvorrichtung 150 angeordnet, die im Detail in Fig. 3 dargestellt ist. Die Schutzvorrichtung 150 ist zwischen jedem Fenster 110 der Hochvakuumkammer 100 den entsprechenden Positionen des Werkstücks 200 positionierbar.

Fig. 3 zeigt eine Prinzipskizze eines Ausschnitts einer erfindungsgemäßen Hochvakuumkammer 100 und insbesondere die Schutzvorrichtung 150 im Detail. In dem Ausschnitt ist ein sich in der Wandung 101 der Hochvakuumkammer 100 befindliches Fenster 110 dargestellt. Das Fenster 110 ist mittels eines Fensterflansches 113 in einen Flansch 105, der in der Wandung 101 der Hochvakuumkammer 100 gebildet ist, eingebaut. Der Fensterflansch 113 ist mittels Schrauben 114 in dem Flansch 105 der Hochvakuumkammer 100 befestigt und über einen O-Ring 106 eingedichtet. In dem Fensterflansch 113 ist eine Fensterscheibe 111 über einen O-Ring 112 druckdicht eingebaut. Auf der Fensterscheibe 111 sitzt eine Laservorrichtung 300 dergestalt auf, dass ein von ihr emittierter Laserstrahl 310 durch die Fensterscheibe 111 in die Hochvakuumkammer 100 einkoppelbar ist. Die Fensterscheibe 111 ist zu diesem Zweck für den Laserstrahl 310 transparent, d.h. für die Wellenlänge der von der Laservorrichtung 300 emittierten Strahlung möglichst verlustarm durchgängig.

Zwischen dem Fenster 110 und dem in der zweiten Spannvorrichtung 130 aufgespannten Werkstück 200 ist eine Schutzvorrichtung 150 positioniert, wobei die zweite Spannvorrichtung 130 ihrerseits in einer ersten Spannvorrichtung 120 eingespannt ist.

Die Schutzvorrichtung 150 weist eine Translationsvorrichtung 170 in Form eines Wagens auf, wobei die Translationsvorrichtung 170 mittels Rädern 171 auf Schienen 180 translatorisch oszillierend beweglich ausgeführt ist. Auf der Translationsvorrichtung 170 ist ein Drehteller 152 vorgesehen, in den eine Scheibe 151 aufgenommen ist. Die Scheibe 151 ist kreisrund ausgeführt und für den Laserstrahl 310 transparent, d.h. für die Wellenlänge der von der Laservorrichtung 300 emittierten Strahlung möglichst verlustarm durchgängig. Die Scheibe 151 kann aus Quartzglas oder Saphirglas hergestellt sein. Dabei muss die Scheibe 151 keine Druckdifferenz zwischen ihren Flächen trennen und kann daher wesentlich dünner ausgeführt sein als die Fensterscheibe 111. Der Drehteller 152 wird über einen auf der Translationsvorrichtung 170 vorgesehenen Antrieb und einen Riemen 154 in Rotation versetzt, wodurch die Scheibe 151 um ihre eigene Achse rotiert. Die Translationsvorrichtung 170 weist ein Langloch 172 auf, durch das der Laserstrahl 310 hindurchtreten kann. Das Langloch 172 ist in Bezug auf die mögliche Oszillationsbewegung der Translationsvorrichtung 170 so bemessen, dass der Laserstrahl 310 unabhängige von der Position der Translationsvorrichtung 170 während ihrer Oszillationsbewegung durch das Langloch 172 hindurchtreten kann. Zwischen der Translationsvorrichtung 170 und dem Werkstück 200 ist ein Vorblech 160 in Bezug zu dem Laserstrahl 310 ortsfest angeordnet. Mit anderen Worten ist das Vorblech nicht mit der Translationsvorrichtung wirkverbunden, sondern bezüglich des Fensters 110, durch das der Laserstrahl 310 eingekoppelt wird, ortsfest vorgesehen. Beispielsweise kann das Vorblech 160 an der Schutzvorrichtung 150 beispielsweise über die Schienen 180 montiert sein. Das Vorblech weist eine Durchgangsbohrung 161 auf, die so angeordnet ist, dass der Laserstrahl 310 ungehindert hindurchtreten kann. Die Durchgangsbohrung 161 kann eine Blende 162 mit veränderbarem Durchlassdurchmesser aufweisen.

In der gezeigten Ausführungsform weist das Vorblech 160 einen Adapter 163 mit einem Durchlasskanal 164 auf. Der Adapter 163 ist zwischen dem Vorblech 160 und dem Werkstück 200 angeordnet, wobei der Durchgangskanal 164 zentrisch zu der Durchgangsbohrung 161 des Vorblechs 160 angeordnet ist, sodass der Laserstrahl 310 in den Durchgangskanal eintreten und hindurchtreten kann. Der Adapter 163 weist eine kegelförmige Außenkontur und an seinem, dem Werkstück 200 zugewandten Ende eine Blende 165 mit veränderbarem Durchlassdurchmesser auf. Der Adapter 163 ist mit dem Vorblech 160 über eine Schraub- oder Nietverbindung verbunden. Diese Ausgestaltung vereinfacht die Positionierung des Adapters 163 in Bezug auf das Vorblech 160. Die Verbindung kann über alle bekannten Verbindungstechniken, wie Schraub-,Niet-, Löt- oder Schweißverbindungen oder auch für eine formschlüssige Verbindung erfolgen.

Die Schutzvorrichtung 150 bietet eine alternative Oberfläche, auf der sich die Teilchen 210 als Verunreinigungen niederschlagen, sodass die Oberfläche des Fensters 110, insbesondere die der Fensterscheibe 111 nicht oder nur in deutlich verringertem Maß verunreinigt wird. Der Strahlengang wird dabei bedingt durch die Transparenz der Scheibe 151 nicht beeinflusst. Die Scheibe 151 kann um die eigene Achse rotieren, sodass der Laserstrahl 310 einen ringförmigen Bereich der Scheibe 151 durchstrahlt. Durch das mit der Durchgangsbohrung 161 versehene Vorblech 160 werden alle Bereiche der Scheibe 151 außer dem sich gegenüber der Durchgangsbohrung 160 befindlichen Bereich abgedeckt, sodass sich hier keine oder nur eine sehr geringe Verunreinigung ablagern kann.

Durch die Translationsvorrichtung wird die Scheibe 151 zusätzlich zu ihrer rotatorischen Bewegung relativ zu der Hochvakuumkammer 100 translatorisch oszillierend bewegt. Dadurch wird der von dem Laserstrahl 310 durchstrahlte Bereich der Scheibe 151 von dem ringförmigen Bereich auf die gesamte Fläche der Scheibe 151 ausgedehnt. Weiterhin wird eine Verunreinigung auf der gesamten Fläche der Scheibe 151 verteilt, wodurch die Konzentration der Verunreinigung auf der Scheibe 151 sehr viel langsamer ansteigt, womit die unterbrechungsfreie Bearbeitungszeit eines Werkstücks 200 in der Hochvakuumkammer 100 gegenüber dem Stand der Technik deutlich verlängert ist. Weitere Minimierung der Verunreinigung der Scheibe 151 ergeben sich durch die durchlassquerschnittsveränderbare Blende 165 des Adapters 163 und die durchlassquerschnittsveränderbare Blende 162 des Vorblechs 160, da die entsprechenden Durchlassquerschnitte auf den Durchmesser des jeweiligen Laserstrahl 310 minimiert werden können, wodurch noch weniger Teilchen 210 auf die Scheibe 151 gelangen können.

Auch die kegelförmige Außenkontur des Adapter 163 hat den Effekt, dass noch mehr Teilchen 210 davon abgehalten werden, bis zur Scheibe 151 vorzudringen.

Insgesamt hält die Schutzvorrichtung 150 einen Großteil der freiwerdenden Teilchen 210 davon ab, bis zur Fensterscheibe 111 vorzudringen. Die Scheibe 151 der Schutzvorrichtung 150 kann, sollte sie trotz des Vorblechs 160, des Adapters 163 und der Blenden 162 und 165 nach langer Betriebszeit vollflächig so verunreinigt sein, dass ein weiterer wirtschaftlicher Betrieb der Hochvakuumkammer 100 nicht mehr möglich ist, gereinigt oder ausgetauscht werden. Da die Scheibe 151 deutlich dünner als die Fensterscheibe 111 ausgeführt werden kann und darüber hinaus deutlich einfacher ausgetauscht werden kann als die Fensterscheibe 111, da sie nicht druckdicht eingebaut werden muss, ist ein Austausch deutlich kostengünstiger als der der Fensterscheibe 111. Zur Reinigung der Scheibe 151 kann diese nach Beendigung oder Unterbrechung des Bearbeitungsprozesses durch Auftragen einer Diamantsuspension und Polieren mittels Reiben einer Filzscheibe über die Scheibenoberfläche poliert werden. Wird die Scheibe 151 regelmäßig auf diese Art gereinigt, können die Verunreinigungen leicht entfernt werden, wodurch die Standzeit der Scheibe 151 deutlich erhöht wird. Dabei hat es sich als vorteilhaft erwiesen, wenn die Diamantsuspension Diamantkörner mit einem Durchmesser von ca. 3 µm enthält. Mit einer solchen Diamantsuspension ist eine besonders effektive Reinigung der Scheibe 151 möglich.

Die hier gezeigten Ausführungsformen stellen nur Beispiele für die vorliegende Erfindung dar und dürfen daher nicht einschränkend verstanden werden.

### Bezugszeichenliste:

- 100: Hochvakuumkammer
- 101: Wandung
- 102: Schlitten
- 103: Stirnplatte
- 104: Steuerschrank
- 105: Flansch
- 106: O-Ring
- 110: Fenster
- 111: Fensterscheibe
- 112: O-Ring
- 113: Fensterflansch
- 114: Schraube
- 120: erste Spannvorrichtung
- 130: zweite Spannvorrichtung
- 150: Schutzvorrichtung
- 151: Scheibe
- 152: Drehteller
- 154: Riemen
- 153: Antrieb
- 160: Vorblech
- 161: Durchgangsbohrung
- 162: Blende
- 163: Adapter
- 164: Durchgangskanal
- 165: Blende
- 170: Translationsvorrichtung
- 171: Rad
- 172: Langloch
- 180: Schiene
- 200: Werkstück
- 201: Teilchen
- 202: Plasmawolke
- 300: Laservorrichtung
- 310: Laserstahl

## Patentansprüche

1. Hochvakuumkammer (100) für die thermische Bearbeitung eines Werkstücks (200) mittels eines Laserstrahls (310), wobei in der Hochvakuumkammer (100) ein Vakuum von 10⁻³ mbar oder tiefer erzeugbar ist und wobei die Hochvakuumkammer (100) mindestens ein Fenster (110) aufweist, durch das der Laserstrahl (310) einkoppelbar und das zu bearbeitende Werkstück (200) in der Hochvakuumkammer (100) positionierbar ist,
wobei zwischen dem mindestens einem Fenster (110) und dem Werkstück (200) eine Schutzvorrichtung (150) angeordnet ist,
**dadurch gekennzeichnet, dass**
die Schutzvorrichtung (150) eine flächige, für die Wellenlänge des Laserstahls (310) transparente und um die eigene Achse rotierbare Scheibe (151) aufweist, wobei die Schutzvorrichtung (150) so innerhalb der Hochvakuumkammer (100) angeordnet ist, dass der Laserstrahl (310) durch die Scheibe (151) hindurch auf das Werkstück (200) leitbar ist, wobei die Schutzvorrichtung (150) weiterhin ein zwischen der Scheibe (151) und dem Werkstück (200) angeordnetes und eine Durchgangsbohrung (161) aufweisendes Vorblech (160) aufweist, wobei die Schutzvorrichtung (150) so innerhalb der Hochvakuumkammer (100) angeordnet ist, dass der Laserstrahl (310) durch die Scheibe (151) und die Durchgangsbohrung (161) des Vorblechs (160) hindurch auf das Werkstück (200) leitbar ist, wobei die Schutzvorrichtung (150) weiterhin eine Translationsvorrichtung (170) aufweist, die relativ zu der Hochvakuumkammer (100) translatorisch oszillierend bewegbar angeordnet ist, wobei die Scheibe (151) rotatorisch bewegbar relativ zu der Translationsvorrichtung (170) angeordnet und mit der Translationsvorrichtung (170) in der Weise verbunden ist, dass die Scheibe (151) zusätzlich zu ihrer rotatorischen Bewegung relativ zu der Hochvakuumkammer (100) translatorisch oszillierend bewegt werden kann.

2. Hochvakuumkammer (100) gemäß Anspruch 1,
**dadurch gekennzeichnet,**
**dass** die Durchgangsbohrung (161) des Vorblechs (160) eine Blende (162) mit veränderbarem Durchlassdurchmesser aufweist.

3. Hochvakuumkammer (100) gemäß einem der vorherigen Ansprüche,
**dadurch gekennzeichnet,**
**dass** zwischen dem Vorblech (160) und dem Werkstück (200) ein Adapter (163) angeordnet ist, wobei der Adapter (163) einen Durchgangskanal (164) für den Laserstrahl (310) aufweist, wobei der Durchgangskanal (164) zentrisch zu der Durchgangsbohrung (161) des Vorblechs (160) angeordnet ist.

4. Hochvakuumkammer (100) gemäß Anspruch 3,
**dadurch gekennzeichnet,**
**dass** der Durchgangskanal (164) eine Blende (165) mit veränderbarem Durchlassdurchmesser aufweist.

5. Hochvakuumkammer (100) gemäß einem der Ansprüche 3 oder 4,
**dadurch gekennzeichnet,**
**dass** der Adapter (163) mit dem Vorblech (160) verbunden ist.

6. Hochvakuumkammer (100) gemäß einem der Ansprüche 3 bis 5,
**dadurch gekennzeichnet,**
**dass** der Adapter (163) eine kegelförmige Außenkontur aufweist.

7. Hochvakuumkammer (100) gemäß einem der vorherigen Ansprüche,
**dadurch gekennzeichnet,**
**dass** das Vorblech (160) ortsfest bezüglich des Laserstrahls (310) angeordnet ist.

8. Hochvakuumkammer (100) gemäß einem der vorherigen Ansprüche,
**dadurch gekennzeichnet,**
**dass** die Scheibe (151) auf einem Drehteller (152) gelagert ist.

9. Hochvakuumkammer (100) gemäß einem der vorherigen Ansprüche,
**dadurch gekennzeichnet,**
**dass** die Hochvakuumkammer (100) mehrere Fenster (110) aufweist, durch die der Laserstrahl (310) einkoppelbar ist.

10. Hochvakuumkammer (100) gemäß einem der vorherigen Ansprüche,
**dadurch gekennzeichnet,**
**dass** die Schutzvorrichtung (150) zwischen jedem Fenster (110) der Hochvakuumkammer (100) und dem Werkstück (200) positionierbar ist.

11. Hochvakuumkammer (100) gemäß einem der vorherigen Ansprüche,
**dadurch gekennzeichnet,**
**dass** die Hochvakuumkammer (100) eine erste Spannvorrichtung (120) zur Positionierung des Werkstücks (200) aufweist.

12. Hochvakuumkammer (100) gemäß Anspruch 11,
**dadurch gekennzeichnet,**
**dass** die erste Spannvorrichtung (120) dazu eingerichtet ist, das Werkstück (200) translatorisch bezüglich der Hochvakuumkammer (100) zu positionieren und die Hochvakuumkammer (100) eine zweite Spannvorrichtung (130) zur rotatorischen Positionierung des Werkstücks (200), die auf der ersten Spannvorrichtung (120) aufgespannt ist, aufweist.

13. System für die thermische Bearbeitung eines Werkstücks (200) mittels eines Laserstrahls (310),
**dadurch gekennzeichnet,**
**dass** das System eine Hochvakuumkammer (100) gemäß einem der vorherigen Ansprüche und eine Laservorrichtung (300), der außerhalb der Hochvakuumkammer (100) angeordnet ist, aufweist.

14. Verfahren zum Betreiben einer Hochvakuumkammer (100) für die thermische Bearbeitung eines Werkstücks (200) mittels eines Laserstrahls (310), wobei die Hochvakuumkammer (100) mindestens ein Fenster(110) und eine Schutzvorrichtung (150) aufweist,
**dadurch gekennzeichnet, dass**
die Schutzvorrichtung (150) ein zwischen der Scheibe (151) und dem Werkstück (200) angeordnetes und eine Durchgangsbohrung (161) aufweisendes Vorblech (160) aufweist und wobei die Schutzvorrichtung (150) eine bezüglich der Hochvakuumkammer (100) translatorisch oszillierend bewegbare Translationsvorrichtung (170) und eine bezüglich der Translationsvorrichtung (170) um ihre eigene Achse rotierbare, für die Wellenlänge des Laserstahls (310) transparente Scheibe (151) aufweist, die mit der Translationsvorrichtung (170) verbunden ist,
und das Verfahren weiter
**gekennzeichnet ist durch die Schritte**
• Positionieren eines Werkstücks (200) in der Hochvakuumkammer (100),
• Schließen der Hochvakuumkammer (100) und erzeugen eines Vakuums innerhalb der Hochvakuumkammer (100) von mindestens 10⁻³ mbar,
• Starten der Rotation der Scheibe (151) und einer oszillierenden Translationsbewegung der Translationsvorrichtung (170), so dass die Scheibe (151) zusätzlich zu ihrer rotatorischen Bewegung relativ zu der Hochvakuumkammer (100) translatorisch oszillierend bewegt wird,
• Einkoppeln des Laserstrahls (310).

15. Verfahren gemäß Anspruch 14,
**dadurch gekennzeichnet,**
**dass** die Scheibe (151) nach Beendigung oder Unterbrechung des Bearbeitungsprozesses durch Auftragen einer Diamantsuspension und Polieren mittels Reiben einer Filzscheibe über die Oberfläche der Scheibe (151) gereinigt wird.

16. Verfahren gemäß Anspruch 15,
**dadurch gekennzeichnet,**
**dass** die Diamantsuspension Diamantkörner mit einem Durchmesser von ca. 3µm enthält.

## Claims

1. High-vacuum chamber (100) for the thermal processing of a workpiece (200) by means of a laser beam (310), wherein a vacuum of 10⁻³ mbar or lower can be generated in the high-vacuum chamber (100) and wherein the high-vacuum chamber (100) has at least one window (110) through which the laser beam (310) can be coupled in and the workpiece (200) to be processed can be positioned in the high-vacuum chamber (100), wherein a protective device (150) is arranged between the at least one window (110) and the workpiece (200), **characterised in that** the protective device (150) comprises a flat disc (151) which is transparent to the wavelength of the laser beam (310) and rotatable about its own axis, wherein the protective device (150) is arranged within the high-vacuum chamber (100) in such a way that the laser beam (310) can be guided through the disc (151) onto the workpiece (200), wherein the protective device (150) further comprises a front plate (160) arranged between the disc (151) and the workpiece (200) and having a through-hole (161), wherein the protective device (150) is arranged within the high vacuum chamber (100) in such a way that the laser beam (310) can be guided through the disc (151) and the through-hole (161) of the front plate (160) onto the workpiece (200), wherein the protective device (150) further comprises a translation device (170) which is arranged to be movable in an oscillating translational manner relative to the high vacuum chamber (100), wherein the disc (151) is arranged to be movable in a rotational manner relative to the translation device (170) and is connected to the translation device (170) in such a way that the disc (151) can be moved in an oscillating translational manner relative to the high vacuum chamber (100) in addition to its rotational movement .

2. High-vacuum chamber (100) according to claim 1, **characterised in that** the through bore (161) of the front plate (160) has an orifice (162) with a variable passage diameter.

3. High-vacuum chamber (100) according to one of the preceding claims, **characterised in that** an adapter (163) is arranged between the front plate (160) and the workpiece (200), wherein the adapter (163) has a through channel (164) for the laser beam (310), wherein the through channel (164) is arranged centrally to the through bore (161) of the front plate (160).

4. High-vacuum chamber (100) according to claim 3, **characterised in that** the through-channel (164) has an orifice (165) with a variable passage diameter.

5. High-vacuum chamber (100) according to one of claims 3 or 4, **characterised in that** the adapter (163) is connected to the front plate (160).

6. High-vacuum chamber (100) according to one of claims 3 to 5, **characterised in that** the adapter (163) has a conical outer contour.

7. High-vacuum chamber (100) according to one of the preceding claims, **characterised in that** the front plate (160) is arranged in a stationary manner with respect to the laser beam (310).

8. High-vacuum chamber (100) according to one of the preceding claims, **characterised in that** the disc (151) is mounted on a turntable (152).

9. High-vacuum chamber (100) according to one of the preceding claims, **characterised in that** the high-vacuum chamber (100) has a plurality of windows (110) through which the laser beam (310) can be coupled.

10. High-vacuum chamber (100) according to one of the preceding claims, **characterised in that** the protective device (150) can be positioned between each window (110) of the high-vacuum chamber (100) and the workpiece (200).

11. High-vacuum chamber (100) according to one of the preceding claims, **characterised in that** the high-vacuum chamber (100) has a first clamping device (120) for positioning the workpiece (200).

12. High-vacuum chamber (100) according to claim 11, **characterised in that** the first clamping device (120) is set up to position the workpiece (200) translationally with respect to the high-vacuum chamber (100) and the high-vacuum chamber (100) has a second clamping device (130) for rotational positioning of the workpiece (200), which is clamped on the first clamping device (120).

13. A system for the thermal processing of a workpiece (200) by means of a laser beam (310), **characterised in that** the system comprises a high vacuum chamber (100) according to one of the preceding claims and a laser device (300) arranged outside the high vacuum chamber (100).

14. Method for operating a high-vacuum chamber (100) for the thermal processing of a workpiece (200) by means of a laser beam (310), wherein the high-vacuum chamber (100) has at least one window (110) and a protective device (150), **characterised in that in that** the protective device (150) has a front plate (160) which is arranged between the disc (151) and the workpiece (200) and has a through-hole (161), and wherein the protective device (150) has a translation device (170) which can be moved in an oscillating translatory manner with respect to the high-vacuum chamber (100) and a translation device (170) which can be rotated about its own axis with respect to the translation device (170), , transparent to the wavelength of the laser steel (310), which is connected to the translation device (170), and the method is further **characterised by the steps of,**
• Positioning a workpiece (200) in the high vacuum chamber (100),
• Close the high vacuum chamber (100) and create a vacuum inside the high vacuum chamber (100) of at least 10⁻³ mbar,
• Starting the rotation of the disc (151) and an oscillating translational movement of the translation device (170), so that the disc (151), in addition to its rotational movement relative to the high vacuum chamber (100), is moved in an oscillating translational manner,
• Coupling of the laser beam (310).

15. Method according to claim 14, **characterised in that** the disc (151) is cleaned after completion or interruption of the machining process by applying a diamond suspension and polishing by rubbing a felt disc over the surface of the disc (151).

16. Method according to claim 15, **characterised in that** the diamond suspension contains diamond grains with a diameter of approximately 3 m.µ

## Revendications

1. Chambre à vide poussé (100) pour le traitement thermique d'une pièce (200) au moyen d'un faisceau laser (310), un vide de 10⁻³ mbar ou plus pouvant être généré dans la chambre à vide poussé (100) et la chambre à vide poussé (100) présentant au moins une fenêtre (110) à travers laquelle le faisceau laser (310) peut être couplé et la pièce (200) à traiter peut être positionnée dans la chambre à vide poussé (100), un dispositif de protection (150) étant disposé entre la au moins une fenêtre (110) et la pièce à usiner (200), **caractérisé en ce que** le dispositif de protection (150) présente une vitre (151) plane, transparente pour la longueur d'onde de l'acier laser (310) et pouvant tourner autour de son propre axe, le dispositif de protection (150) étant disposé à l'intérieur de la chambre à vide poussé (100) de telle sorte que le rayon laser (310) puisse être guidé à travers la vitre (151) sur la pièce à usiner (200), le dispositif de protection (150) comprenant en outre une tôle de parement (160) disposée entre la vitre (151) et la pièce à usiner (200) et présentant un trou traversant (161), le dispositif de protection (150) étant disposé à l'intérieur de la chambre à vide poussé (100) de telle sorte que le faisceau laser (310) puisse être dirigé sur la pièce à usiner (200) à travers la vitre (151) et le trou traversant (161) de la tôle de parement (160), le dispositif de protection (150) comprenant en outre un dispositif de translation (170) qui est disposé de manière à pouvoir se déplacer en translation et en oscillation par rapport à la chambre à vide poussé (100), le disque (151) étant disposé de manière à pouvoir se déplacer en rotation par rapport au dispositif de translation (170) et étant relié au dispositif de translation (170) de telle manière que le disque (151) peut être déplacé en translation et en oscillation en plus de son mouvement de rotation par rapport à la chambre à vide poussé (100) .

2. Chambre à vide poussé (100) selon la revendication 1, **caractérisée, en ce que** le trou de passage (161) de la tôle de parement (160) présente un diaphragme (162) à diamètre de passage variable.

3. Chambre à vide poussé (100) selon l'une des revendications précédentes, **caractérisée en ce qu'**un adaptateur (163) est disposé entre la tôle préliminaire (160) et la pièce à usiner (200), l'adaptateur (163) présentant un canal de passage (164) pour le faisceau laser (310), le canal de passage (164) étant disposé de manière centrée par rapport au trou de passage (161) de la tôle préliminaire (160).

4. Chambre à vide poussé (100) selon la revendication 3, **caractérisée en ce que** le canal de passage (164) comporte un diaphragme (165) à diamètre de passage variable.

5. Chambre à vide poussé (100) selon l'une des revendications 3 ou 4, **caractérisée en ce que** l'adaptateur (163) est relié à la pré-plaque (160).

6. Chambre à vide poussé (100) selon l'une des revendications 3 à 5, **caractérisée en ce que** l'adaptateur (163) présente un contour extérieur conique.

7. Chambre à vide poussé (100) selon l'une des revendications précédentes, **caractérisée en ce que** la pré-plaque (160) est fixe par rapport au faisceau laser (310).

8. Chambre à vide poussé (100) selon l'une des revendications précédentes, **caractérisée en ce que** le disque (151) est monté sur un plateau tournant (152).

9. Chambre à vide poussé (100) selon l'une des revendications précédentes, **caractérisée en ce que** la chambre à vide poussé (100) comprend une pluralité de fenêtres (110) à travers lesquelles le faisceau laser (310) peut être couplé.

10. Chambre à vide poussé (100) selon l'une des revendications précédentes, **caractérisée en ce que** le dispositif de protection (150) est positionnable entre chaque fenêtre (110) de la chambre à vide poussé (100) et la pièce (200).

11. Chambre à vide poussé (100) selon l'une des revendications précédentes, **caractérisée en ce que** la chambre à vide poussé (100) comprend un premier dispositif de serrage (120) pour le positionnement de la pièce (200).

12. Chambre à vide poussé (100) selon la revendication 11, **caractérisée en ce que** le premier dispositif de serrage (120) est adapté pour positionner la pièce (200) en translation par rapport à la chambre à vide poussé (100) et la chambre à vide poussé (100) comporte un deuxième dispositif de serrage (130) pour le positionnement en rotation de la pièce (200) serrée sur le premier dispositif de serrage (120).

13. Système pour le traitement thermique d'une pièce (200) au moyen d'un faisceau laser (310), **caractérisé en ce que** le système comprend une chambre à vide poussé (100) selon l'une des revendications précédentes et un dispositif laser (300) disposé à l'extérieur de la chambre à vide poussé (100).

14. Procédé de fonctionnement d'une chambre à vide poussé (100) pour le traitement thermique d'une pièce (200) au moyen d'un faisceau laser (310), la chambre à vide poussé (100) présentant au moins une fenêtre (110) et un dispositif de protection (150), **caractérisé en ce que en ce que** le dispositif de protection (150) présente une tôle préliminaire (160) disposée entre la vitre (151) et la pièce à usiner (200) et présentant un trou de passage (161) et où le dispositif de protection (150) présente un dispositif de translation (170) mobile en translation oscillante par rapport à la chambre à vide poussé (100) et un dispositif de rotation autour de son propre axe par rapport au dispositif de translation (170), (151) transparent à la longueur d'onde de l'acier laser (310), qui est relié au dispositif de translation (170), et le procédé est en outre **caractérisé par les étapes suivantes,**
• le positionnement d'une pièce (200) dans la chambre à vide poussé (100),
• fermeture de la chambre à vide poussé (100) et création d'un vide à l'intérieur de la chambre à vide poussé (100) d'au moins 10⁻³ mbar,
• démarrer la rotation du disque (151) et un mouvement de translation oscillant du dispositif de translation (170), de sorte que le disque (151) est déplacé en translation oscillante en plus de son mouvement de rotation par rapport à la chambre à vide poussé (100),
• Couplage du faisceau laser (310).

15. Procédé selon la revendication 14, **caractérisé en ce que** le disque (151) est nettoyé après la fin ou l'interruption du processus d'usinage par application d'une suspension diamantée et polissage par frottement d'un disque de feutre sur la surface du disque (151).

16. Procédé selon la revendication 15, **caractérisé en ce que** la suspension diamantée contient des grains de diamant d'un diamètre d'environ 3 m.µ
